# EUROPEAN PATENT APPLICATION

(11) **EP 4 811 728 A1**
(43) Date of publication of application: **23.09.2026**
(21) Application number: 25744715.1
(22) Date of filing: 24.01.2025
(51) Int. Cl.: H04L 12/46

(54) **NETWORKING METHOD, APPARATUS AND SYSTEM, AND ELECTRONIC DEVICE AND STORAGE MEDIUM**

(30) Priority: 25.01.2024 CN 202410110527
(71) Applicant: Ruijie Networks Co., Ltd., Fuzhou, Fujian 350002 (CN)
(72) Inventor: LIU, Guoqing, Fuzhou, Fujian 350002 (CN); LU, Chengbin, Fuzhou, Fujian 350002 (CN); FU, Zhibin, Fuzhou, Fujian 350002 (CN)
(74) Representative: Mathys & Squire
(86) International application number: PCT/CN2025/074576
(87) International publication number: WO 2025/157252

(57) **Abstract**

Embodiments of the present application disclose a networking method, apparatus, and system, an electronic device, and a storage medium. The networking method, applied to a first router to be networked, includes: determining, when the first router is determined as a sub-router, whether the optical modem supports transparent transmission of a preset virtual local area network identifier VLAN ID; and switching a packet forwarding channel type in the first router to a target channel type when the optical modem does not support transparent transmission of the preset VLAN ID; where the target channel type is a packet channel type through which the optical modem performs transparent transmission of packets.

## Description

### CROSS-REFERENCE TO RELATED APPLICATIONS

The present application claims priority to a Chinese patent application filed with the State Intellectual Property Office of China on January 25, 2024, with application No. 202410110527.3 and entitled "PARALLEL NETWORKING METHOD, ROUTER, AND PARALLEL NETWORKING SYSTEM", which is incorporated into the present application by reference in its entirety.

### TECHNICAL FIELD

The present application relates to the technical field of networking, and in particular to a networking method, apparatus, and system, an electronic device, and a storage medium.

### BACKGROUND

With the improvement of household living standards, the floor area of residential houses is becoming large. However, for large-sized residential houses (for example, with a floor area exceeding 120 square meters), a single consumer router can no longer meet the requirements of family wireless network coverage. Therefore, consumer router manufacturers have successively proposed wireless networking and wired networking solutions.

Wired networking further includes networking modes of access controller (AC) and wireless access point (AP), as well as AP mesh (MESH) networking mode. Essentially, AP MESH is also AC+AP networking, except that the AC is not a physical AC hardware device, but a logical AC implemented by a software function module. For example, one AP undertakes the function of the logical AC.

The AC+AP networking solution applies enterprise-class wireless solutions to home networking scenarios. In this solution, the AC shall be installed in a weak current box, and the AP may be an 86-type panel AP. However, this solution incurs higher costs and imposes certain professional requirements for installation and deployment.

Compared with the AC+AP solution, the router MESH networking solution (that is, AP mesh networking mode) undoubtedly provides higher cost-performance ratio. The router MESH networking solution supports both wired MESH networking and wireless MESH networking, featuring highly flexible networking modes. When network cables have been pre-buried in the home network, the wired MESH networking mode can be adopted.

Wired MESH networking adopts a series networking mode by default. This mode requires the main router (router with logical AC function) to be installed in the weak current box.

Another wired MSEH networking solution is to place the main router at the center position of the house, for example, the living room. In this case, the wide area network (WAN) port of the main router shall be connected via an upstream network cable to the optical modem (also known as optical network unit) located in the weak current box, and the LAN port shall be connected to a switch via a network cable, thereby implementing networking.

### SUMMARY

Embodiments of the present application disclose a networking method, apparatus, and system, an electronic device, and a storage medium.

According to a first aspect, an embodiment of the present application provides the following technical solution:
A parallel networking method, applied to a first router to be networked, including:
determining, when the first router is determined as a sub-router, whether the optical modem supports transparent transmission of a preset virtual local area network identifier VLAN ID; and
switching a packet forwarding channel type in the first router to a target channel type when the optical modem does not support transparent transmission of the preset VLAN ID; where the target channel type is a packet channel type through which the optical modem performs transparent transmission of packets.

In some embodiments, before the first router is determined as the sub-router, the method further includes:
in response to a parallel networking command, determining a router role of the first router based on a preset election rule; where the router role includes a main router and a sub-router; and the parallel networking command is broadcast in response to a networking instruction input by a user.

In some embodiments, after the determining whether the optical modem supports transparent transmission of the preset virtual local area network identifier VLAN ID, the method further includes:
when the optical modem does not support transparent transmission of the preset VLAN ID, establishing an interaction channel for interaction with a default VLAN ID channel, and switching the packet forwarding channel to the interaction channel.

The parallel networking method of the present application includes following operations in a routing mode. The method first determines that a second router to be networked and the first router to be networked are connected in parallel to the optical modem. Then the user enables the parallel networking command, and the first router to be networked broadcasts the parallel networking command. Then, the first router and the second router determine the main router based on the preset election rule. When the first router is determined as the sub-router, the packet forwarding channel of the sub-router needs to be switched to the target channel type according to the packet channel type of the optical modem, so that the packets of the sub-router may be transparently transmitted by the optical modem to the main router, so as to implement packet interaction between the sub-router and the main router, and successfully achieve networking. The present application solves the problem of failure of parallel networking based on the optical modem due to inconsistency between the packet transparent transmission channel of the optical modem and the packet forwarding channel of the router.

In some embodiments, the switching the packet forwarding channel type in the sub-router to the target channel type includes:
detecting whether the optical modem supports transparent transmission of the preset VLAN ID; when the optical modem supports transparent transmission of the preset VLAN ID, switching the packet forwarding channel to the preset VLAN ID channel; and when the optical modem does not support transparent transmission of the preset VLAN ID, establishing an interaction channel for interaction with the default VLAN ID channel, and switching the packet forwarding channel to the interaction channel.

The present application detects whether the optical modem supports transparent transmission of the preset VLAN ID, and correspondingly switches the packet forwarding channel of the router to the preset VLAN ID channel or establishes and switches to an interaction channel for interaction with a default VLAN ID channel, thereby solving the problem that packet interaction cannot be performed between the optical modem and the router due to failure of the optical modem to support transparent transmission of the preset VLAN ID.

In some embodiments, the detecting whether the optical modem supports transparent transmission of the preset VLAN ID is implemented in the following manner:
sending a detection packet to a preset VLAN ID port of a specified second router through the optical modem, and receiving the detection packet through the preset VLAN ID port of the second router.

By sending a detection packet to the preset VLAN ID port of the specified second router through the optical modem, whether the optical modem supports transparent transmission of the preset VLAN ID of the second router may be determined according to whether the detection packet is received.

In some embodiments, the parallel networking method further includes: acquiring an address assigned by the main router.

In some embodiments, the acquiring the address assigned by the main router includes:
transparently transmitting an address request packet to the main router through the optical modem; and
receiving an address response packet transparently transmitted by the main router through the optical modem to inform a requester of the address request packet; where
the requester includes a first terminal accessing the sub-router and the sub-router.

In some embodiments, the acquiring the address assigned by the main router includes:
transparently transmitting an address request packet sent by a terminal to the main router through the optical modem; and
sending an address response packet transparently transmitted by the main router through the optical modem to the terminal.

In some embodiments, the transparently transmitting the received address request packet to the main router through the optical modem includes:
receiving a first-type packet from the requester, and converting the first-type packet to a second-type packet; where the first-type packet is recognizable by the optical modem and the second-type packet is unrecognizable by the optical modem; and
transparently transmitting the converted second-type packet to the main router through the optical modem; and
the receiving the address response packet transparently transmitted by the main router through the optical modem to inform the requester of the address request packet includes:
   receiving a second-type response packet transparently transmitted through the optical modem, and converting the second-type response packet to a first-type response packet, where the second-type response packet is a response packet sent by the main router based on the second-type packet; and
   sending the first-type response packet to the requester.

In some embodiments, the transparently transmitting the address request packet sent by the terminal to the main router through the optical modem includes:
receiving a first-type packet requested by the terminal, and converting the first-type packet to a second-type packet; where the first-type packet is recognizable by the optical modem and the second-type packet is unrecognizable by the optical modem; and
sending the converted second-type packet to the main router through the optical modem; and
correspondingly, the sending the address response packet transparently transmitted by the main router through the optical modem to the terminal includes:
   receiving a second-type response packet transparently transmitted through the optical modem, and converting the second-type response packet to a first-type response packet, where the second-type response packet is a response packet of the determined main router based on the second-type packet; and
   sending the converted first-type response packet to the terminal.

In some embodiments, a port number of the first-type packet is a port number of the address request packet, and a value of the port number of the first-type packet is different from a value of the port number of the second-type packet.

In some embodiments, the port number of the first-type packet is a port number of the address request packet, and a quantity of digits of the port number of the second-type packet is greater than or equal to a quantity of digits of the port number of the first-type packet.

In some embodiments, the port number of the first-type packet is 67/68, and the port number of the second-type packet is 54067/54068.

In a process of acquiring the address by the sub-router, a packet is always a second-type packet or a second-type response packet when the packet passes through the transparent transmission of the optical modem. Since the optical modem cannot recognize the port numbers of the second-type packet and the second-type response packet, the second-type response packet of the main router is not intercepted due to enabling of a monitoring function of the optical modem, and the optical modem has no opportunity to respond to the first-type packet of the sub-router at the same time. The present application solves the problem that the optical modem prohibits the main router from assigning addresses, and also solves the problem that the optical modem and the main router simultaneously respond to the first-type packet and affect normal interaction.

In some embodiments, the parallel networking method further includes:
submitting an easy-link networking request to the determined main router, and acquiring response information of the main router in response to the easy-link networking request; where the easy-link networking request is forwarded through the optical modem; and
establishing a communication connection with the main router.

In some embodiments, the establishing the communication connection with the main router includes:
switching the first router from a routing mode to an AP mode, and re-establishing a communication connection with the main router, with the first router acting as the sub-router.

After acquiring the address, the sub-router continues to send an easy-link networking request to the main router, and after receiving the response information of the main router, the sub-router switches from the routing mode to the AP mode, and re-establishes the communication connection with the main router. The networking is completed.

In some embodiments, the parallel networking method further includes:
when the first router is determined as a main router, responding to an address request of a terminal forwarded by the sub-router and configuring an address for the sub-router.

In some embodiments, the parallel networking method further includes:
responding to the easy-link networking request of the sub-router and registering information of the sub-router; and
re-establishing a communication connection with the sub-router.

After configuring the address for the sub-router, the main router continues to respond to the easy-link networking request of the sub-router, registers the information of the sub-router, and re-establishes a communication connection with the sub-router. The networking is completed.

In some embodiments, the method further includes:
when the first router is determined as a main router, establishing a preset VLAN ID channel and establishing an interaction channel for interaction with a default VLAN ID channel; and
responding to an address request packet sent by the determined sub-router through the optical modem and configuring an address for a requester of the address request packet; where
the requester includes a first terminal accessing the sub-router and the sub-router.

In some embodiments, the responding to the address request packet of the determined sub-router and configuring the address for the requester of the address request packet includes:
receiving a second-type packet transparently transmitted through the optical modem, and converting the second-type packet to a first-type packet;
responding to the first-type packet, and generating a first-type response packet; and
converting the first-type response packet to a second-type response packet, and transparently transmitting the second-type response packet to the requester of the address request packet through the optical modem; where
the first-type packet and the first-type response packet are recognizable by the optical modem, and the second-type packet and the second-type response packet are unrecognizable by the optical modem.

In a process of configuring the address for the sub-router by the main router, similarly, a packet is always a second-type packet or a second-type response packet when the packet passes through the transparent transmission of the optical modem. Since the optical modem cannot recognize the port numbers of the second-type packet and the second-type response packet, the second-type response packet of the main router is not intercepted due to enabling of a monitoring function of the optical modem, and the optical modem has no opportunity to respond to the first-type packet of the sub-router at the same time. The present application solves the problem that the optical modem prohibits the main router from assigning addresses, and also solves the problem that the optical modem and the main router simultaneously respond to the first-type packet and affect normal interaction.

In some embodiments, the parallel networking method further includes:
when the first router is determined as a main router, simultaneously enabling a preset VLAN ID channel and establishing an interaction channel for interaction with a default VLAN ID channel.

The main router simultaneously enables the preset VLAN ID channel and establishes the interaction channel for interaction with the default VLAN ID channel, so that the packet forwarding channel of the main router may be selected according to the packet transparent transmission channel type of the optical modem.

In some embodiments, the method further includes:
responding to an easy-link networking request sent by the sub-router through the optical modem and registering information of the sub-router; and
establishing a communication connection with the sub-router.

In some embodiments, the parallel networking method further includes:
receiving a first-type packet requested by a second terminal accessing a main router when the first router is determined as the main router; and
generating a first-type response packet based on the first-type packet and sending the first-type response packet to the second terminal.

When the terminal is directly connected to the main router, the main router directly responds to the request of the terminal.

In some embodiments, the method further includes:
in a routing mode, determining that a second router to be networked and the first router are connected in parallel to the optical modem;
in some embodiments, the determining that the second router to be networked and the first router are connected in parallel to the optical modem is implemented in the following manner:
   sending a discovery packet through a wide area network WAN port of the first router; and
   receiving the discovery packet sent by the second router through the WAN port.

Existence of a plurality of routers connected in parallel to the optical modem is determined by sending and receiving a discovery packet through the WAN port.

According to a second aspect, an embodiment of the present application further provides a parallel networking apparatus, applied to a first router, including:
an optical modem parallel discovery module, configured to determine that a second router to be networked and the first router are connected in parallel to the optical modem; further configured to determine the main router together with the second router based on a preset election rule; and further configured to detect whether the optical modem supports transparent transmission of a preset VLAN ID; and
a wireless access point management module, configured to switch a packet forwarding channel type in the sub-router to a target channel type when the first router is the sub-router, so that packets of the sub-router and packets of the main router may be interacted through transparent transmission of the optical modem.

In some embodiments, the wireless access point management module is further configured to, when the first router is the main router, simultaneously enable a preset VLAN ID channel and establish an interaction channel for interaction with a default VLAN ID channel.

According to a third aspect, an embodiment of the present application further provides a router, including:
an optical modem parallel discovery module, configured to determine that a second router to be networked and the router are connected in parallel to an optical modem; further configured to determine the main router together with the second router based on a preset election rule; and further configured to detect whether the optical modem supports transparent transmission of a preset VLAN ID;
a wireless access point management module, configured to switch a packet forwarding channel type in the sub-router to a target channel type when the router is the sub-router, so that packets of the sub-router and packets of the main router may be interacted through transparent transmission of the optical modem.

In some embodiments, the wireless access point management module is further configured to, when the router is the main router, simultaneously enable a preset VLAN ID channel and establish an interaction channel for interaction with a default VLAN ID channel.

The optical modem parallel discovery module of the router of the present application may determine whether a plurality of routers are connected in parallel to the optical modem, and elect the main router based on a preset rule; and the module may also detect the packet channel type of the optical modem, that is, detect whether the optical modem supports transparent transmission of the preset VLAN ID, and switch the packet forwarding channel type of the sub-router according to a detection result, so as to implement packet interaction between the sub-router and the main router, thereby solving the problem failure of parallel networking based on the optical modem due to inconsistency between the packet channel of the optical modem and the packet forwarding channel of the router.

A dynamic host configuration protocol conversion module is configured to convert a first-type packet that cannot be transparently transmitted by the optical modem to a second-type packet that can be transparently transmitted by the optical modem; and further configured to convert the second-type packet to the first-type packet.

A switch chip access control list module, when the router is determined as a sub-router, is configured to receive a first-type packet of a terminal connected to the sub-router, and send the first-type packet to the dynamic host configuration protocol conversion module of the sub-router; further configured to transparently transmit the second-type packet through the optical modem and send it to the dynamic host configuration protocol conversion module of the main router; further configured to receive a second-type response packet responded by the main router, and send the second-type response packet transparently transmitted through the optical modem to the dynamic host configuration protocol conversion module of the sub-router; and further configured to send the first-type response packet to the terminal; and
when the router is determined as the main router, the switch chip access control list module is configured to receive a first-type packet of a terminal connected to the main router, and generate a first-type response packet based on the first-type packet; and further configured to send the first-type response packet to the terminal.

According to a fourth aspect, an embodiment of the present application further provides a parallel networking system, including an optical modem and a plurality of routers as described in the second aspect; where
the plurality of routers are connected in parallel to the optical modem; and
the optical modem is configured to transparently transmit interaction packets between the plurality of routers.

The parallel networking system of the present application achieves packet interaction between the plurality of routers through transparent transmission of the optical modem.

According to a fifth aspect, an embodiment of the present application further provides an electronic device, including a memory, a processor, and a computer program stored on the memory and runnable on the processor, where when the processor executes the program, the parallel networking method according to the first aspect is implemented.

According to a sixth aspect, an embodiment of the present application further provides a computer-readable storage medium having a computer program stored thereon, where when the program is executed by a processor, the parallel networking method according to the first aspect is implemented.

### BRIEF DESCRIPTION OF DRAWINGS

In order to more clearly illustrate the technical solutions in the embodiments of the present application, the accompanying drawings to be used in the description of the embodiments will be briefly introduced below. Obviously, the accompanying drawings in the following description are only some embodiments of the present application. For those of ordinary skill in the art, other accompanying drawings may also be obtained based on these accompanying drawings without creative efforts.
FIG. 1 is a schematic flowchart of a process before a terminal acquires an address according to an embodiment of the present application;
FIG. 2 is a schematic flowchart of step S104 in FIG. 1;
FIG. 3 is a schematic flowchart of a sub-router acquiring an address assigned by a main router according to an embodiment of the present application;
FIG. 4 is a schematic flowchart of step S301 in FIG. 3;
FIG. 5 is a schematic flowchart of step S302 in FIG. 3;
FIG. 6 is a schematic flowchart of a sub-router performing easy-link networking according to an embodiment of the present application;
FIG. 7 is a schematic flowchart of a main router assigning an address to a sub-router and performing easy-link networking according to an embodiment of the present application;
FIG. 8 is a schematic flowchart of step S601 in FIG. 6;
FIG. 9 is a schematic flowchart of an optical modem assigning an address to a terminal according to an embodiment of the present application;
FIG. 10 is a schematic flowchart of a parallel networking method according to an embodiment of the present application;
FIG. 11 is a schematic diagram of a process of acquiring an address by a terminal according to an embodiment of the present application;
FIG. 12 is a schematic structural diagram of a parallel networking system according to an embodiment of the present application; and
FIG. 13 is a schematic structural diagram of a switch chip access control list module of a router according to an embodiment of the present application.

Reference signs: 100, optical modem; 200, sub-router; 300, main router; 1, optical modem parallel discovery module; 2, wireless access point management module; 3, dynamic host configuration protocol conversion module; 4, switch chip access control list module; 5, central processing unit; 41, wide area network port; 42, local area network port; 43, central processing unit port; 51, preset VLAN ID channel; and 52, interaction channel.

### DESCRIPTION OF EMBODIMENTS

The technical solutions in the embodiments of the present application will be clearly and completely described below with reference to the accompanying drawings in the embodiments of the present application. Obviously, the described embodiments are only a part of the embodiments of the present application, but not all of them. All other embodiments obtained by those of ordinary skill in the art based on the embodiments of the present application without creative efforts belong to the protection scope of the present application.

The terms "first" and "second" are used for descriptive purposes only and shall not be understood as indicating or implying relative importance or implicitly indicating the quantity of technical features indicated. Accordingly, the features defined with "first" and "second" may explicitly or implicitly include one or more of the features. In the description of the present application, unless otherwise stated, "a plurality of" means two or more.

Wired MESH networking adopts a series networking mode by default, and such a mode connects an optical modem, a main router, and a switch in series. In this solution, the main router (for example, a router with logical AC function) may be installed in a weak current box. However, the weak current box is generally at an entrance of a house and has a poor location; in addition, the weak current box may adopt a metal cover, which causes unavailability of a wireless Wi-Fi signal of the main router, and is equivalent to wasting a router function of one device. Another mode is to place the main router in a living room; in such a case, a WAN port of the main router needs to be connected to the optical modem located in the weak current box through an upstream network cable, and a LAN port needs to be connected to the switch through a network cable, so two network cables need to be pre-buried in the living room. In many house types of families, pre-burial of two network cables in the living room is not considered in early decoration, which brings great difficulties to wired series networking.

Parallel networking may also be implemented by using an optical modem (also known as optical network unit), that is, all routers are connected in parallel to the optical modem in a physical topology, where the logical topology is that the sub-router is connected in parallel to the main router. At this time, the sub-router operates in an AP mode (the sub-router has an AP function at this time), and the main router operates in a routing mode (the main router has a router function at this time). The main router uniformly manages and controls user traffic, configuration of each sub-router, and the like. The main router undertakes a function of virtual AC. In this way, a restriction of two network cables from the living room main router to the optical modem in wired series networking is solved, and the application is relatively wide.

The parallel networking solution mentioned above is also referred to as optical network unit parallel networking. In such a solution, a backhaul network cable is omitted for the main router, so a network cable restriction of wired series networking is solved. However, when no switch is connected downstream of the optical modem, intranet data traffic of parallel networking needs to be transparently transmitted through bridging of the optical modem. Some optical modems do not have a VLAN transparent transmission capability (that is, do not support transparent transmission of a preset VLAN ID), which affects normal interaction between the optical modem and the router and finally causes networking failure.

Some optical modems enable a dynamic host configuration protocol monitoring (DHCP Snooping) function, thereby prohibiting the main router from assigning addresses. This also causes failure of parallel networking based on the optical modem.

Some optical modems have incomplete support for the preset VLAN ID, and problems such as simultaneous response of the optical modem and the main router to a dynamic host configuration protocol (DHCP) request exist, causing address acquisition errors of the sub-router and a terminal, and finally parallel networking also fails.

The technical solutions in the embodiments of the present application will be clearly and completely described below with reference to the accompanying drawings in the embodiments of the present application. Obviously, the described embodiments are only a part of the embodiments of the present application, but not all of them. All other embodiments obtained by those of ordinary skill in the art based on the embodiments of the present application without creative efforts belong to the protection scope of the present application. Herein, in the description of the embodiments of the present application, unless otherwise stated, "/" means or, for example, A/B may mean A or B; "and/or" in the text is only an association relationship describing an associated object, indicating that three relationships may exist, for example, A and/or B may indicate the following three cases: A exists alone, A and B exist simultaneously, and B exists alone. In addition, in the description of the embodiments of the present application, "a plurality of" refers to two or more.

Hereinafter, the terms "first" and "second" are used for descriptive purposes only and shall not be understood as indicating or implying relative importance or implicitly indicating the quantity of technical features indicated. Accordingly, the features defined with "first" and "second" may explicitly or implicitly include one or more of the features. In the description of the embodiments of the present application, unless otherwise stated, "a plurality of" means two or more.

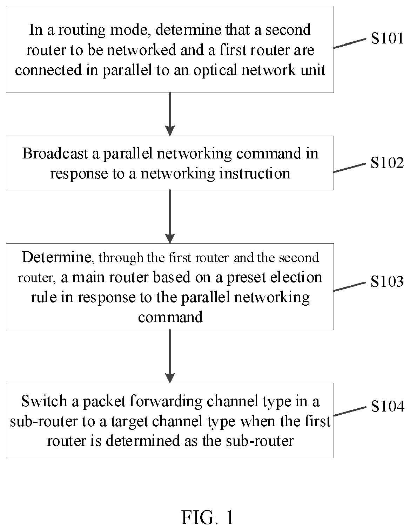

As shown in FIG. 1, an embodiment of the present application provides a parallel networking method, applied to a first router to be networked, including the following steps:
S101. In a routing mode, determine that a second router to be networked and a first router are connected in parallel to an optical modem.

In this step, to be networked represents a state of waiting for access to a network.

S102. Broadcast a parallel networking command in response to a networking instruction.

S103. Determine, through the first router and the second router, a main router based on a preset election rule in response to the parallel networking command.

In this embodiment of the present application, routers for networking each have a router role, and the router role includes a main router and a sub-router. The sub-router operates in an AP mode (the sub-router has an AP function at this time), and the main router operates in a routing mode (the main router may have a router function and an AP function at this time). The main router uniformly manages and controls user traffic, configuration of each sub-router, address assignment, and the like. In this embodiment, the main router may undertake a function of virtual AC.

S104. Switch a packet forwarding channel type in the sub-router to a target channel type when the first router is determined as the sub-router, so that packets of the sub-router and packets of the main router may be interacted through transparent transmission of the optical modem. The target channel type is a packet channel type of the optical modem.

The parallel networking method of the present application, in a routing mode, first determines that the second router to be networked and the first router to be networked are connected in parallel to the optical modem. Next, the first router to be networked broadcasts the parallel networking command when a parallel networking instruction input by the user is received. Then, the first router and the second router determine the main router based on the preset election rule. The packet forwarding channel of the sub-router needs to be switched to the target channel type according to the packet channel type of the optical modem when the first router is determined as the sub-router, so that packets of the sub-router may be transparently transmitted by the optical modem to the main router, so as to implement packet interaction between the sub-router and the main router and successfully implement networking. This embodiment of the present application solves the problem of failure of parallel networking based on the optical modem due to inconsistency between the packet transparent transmission channel of the optical modem and the packet forwarding channel of the router.

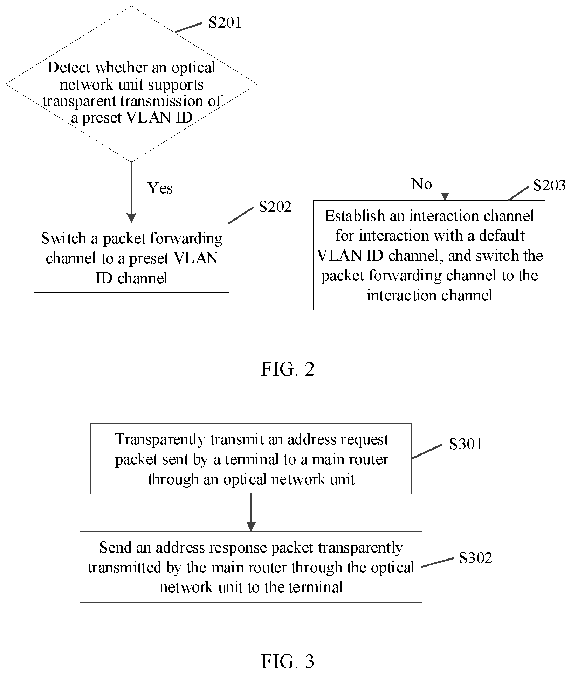

In some embodiments, with reference to FIG. 2, the switching the packet forwarding channel type in the sub-router to the target channel type includes the following steps:
S201. Detect whether the optical modem supports transparent transmission of a preset VLAN ID, execute S202 in a case of YES, and execute S203 in a case of NO.

S202. Switch the packet forwarding channel to a preset VLAN ID channel.

S203. Establish an interaction channel for interaction with a default VLAN ID channel, and switch the packet forwarding channel to the interaction channel.

The packet forwarding channel type in the sub-router of this embodiment of the present application needs to be switched to the packet channel type of the optical modem. Specifically, the packet forwarding channel type of the sub-router is switched to the preset VLAN ID channel when the optical modem supports transparent transmission of the preset VLAN ID, that is, the parallel networking forwarding network channel (hereinafter referred to as VLAN i channel, where i is a positive integer greater than 1). I n response to that the optical modem does not support transparent transmission of the preset VLAN ID, the sub-router establishes an interaction channel for interaction with the default VLAN ID channel, and switches the packet forwarding channel to the interaction channel, that is, a media access control virtual local area network channel (hereinafter referred to as macVLAN channel).

It should be noted that a VLAN ID range may be predefined as 1-4094, where VLAN1 is a default transparent transmission forwarding channel of the optical modem and the router. In order to improve the transparent transmission performance, VLAN4033 is preset as the preset VLAN ID. Since the preset VLAN4033 channel has better forwarding performance and higher priority, the sub-router or a downstream terminal of the sub-router preferentially requests an address from the main router through the preset VLAN4033 channel. The address request packet needs the optical modem to support transparent transmission of the preset VLAN4033. However, some optical modems do not support transparent transmission of the preset VLAN4033 due to the performance of the optical modems, and the address request packet matches the preset VLAN4033 channel and does not match the VLAN1 channel, so that the address request packet cannot be transparently transmitted through the VLAN1 channel, which causes parallel networking failure.

This embodiment of the present application creates a new interaction channel, which does not need the optical modem to support transparent transmission of the preset VLAN ID, and may be interactive with the default VLAN 1 channel of the optical modem, so that packets may be transparently transmitted and forwarded without obstacles. In this embodiment of the present application, this interaction channel may be denoted as a macVLAN channel.

It should be added that, 4033 may alternatively be replaced with other IDs in a range of 1-4094 for forwarding of address request packets in a case that the IDs do not conflict with VLANs of other services. Generally, one ID is sufficient, but a plurality of IDs may be defined, and the present application does not impose a specific limitation thereon.

This embodiment of the present application switches the packet forwarding channel of the sub-router according to the packet channel type of the optical modem, so that the packets of the sub-router may be transparently transmitted by the optical modem and sent to the main router, implementing packet interaction between the sub-router and the main router, and solving the problem of failure of parallel networking due to incapability of the optical modem to support transparent transmission of the preset VLAN ID.

In some embodiments, the detecting whether the optical modem supports transparent transmission of the preset VLAN ID is implemented in the following manner:
sending a detection packet to a preset VLAN ID port of a specified second router through the optical modem, and receiving the detection packet through the preset VLAN ID port of the second router.

In a possible implementation, sending a detection packet to the preset VLAN ID port of the specified second router through the optical modem, and receiving the detection packet through the preset VLAN ID port of the second router indicate that the optical modem supports transparent transmission of the preset VLAN ID. Failure of the second router to receive the detection packet through the preset VLAN ID port indicates that the optical modem does not support transparent transmission of the preset VLAN ID. This embodiment of the present application sends a detection packet to the preset VLAN ID port of the specified second router through the optical modem, and may determine, according to whether the detection packet is received, whether the optical modem supports transparent transmission of the preset VLAN ID.

In some embodiments, the parallel networking method further includes: acquiring an address assigned by the main router.

With reference to FIG. 3, the acquiring the address assigned by the main router may include the following steps:
S301. Transparently transmit an address request packet sent by a terminal to the main router through the optical modem.

S302. Send an address response packet transparently transmitted by the main router through the optical modem to the terminal.

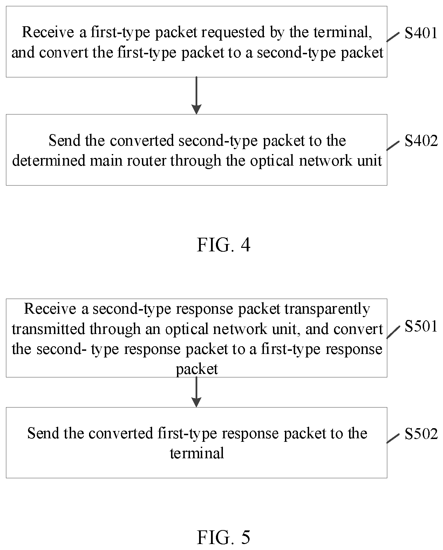

With reference to FIG. 4, the transparently transmitting the address request packet sent by the terminal to the main router through the optical modem may include the following steps:
S401. Receive a first-type packet requested by the terminal, and convert the first-type packet to a second-type packet; where the first-type packet is recognizable by the optical modem and the second-type packet is unrecognizable by the optical modem.

S402. Send the converted second-type packet to the main router through the optical modem.

With reference to FIG. 5, the sending the address response packet transparently transmitted by the main router through the optical modem to the terminal may include the following steps:
S501. Receive a second-type response packet transparently transmitted through the optical modem, and convert the second-type response packet to a first-type response packet, where the second-type response packet is a response packet of the determined main router based on the second-type packet.

S502. Send the converted first-type response packet to the terminal.

In a possible implementation, the first-type packet and the first-type response packet are recognizable by the optical modem. In a case that the optical modem enables a packet snooping (DHCP snooping) function, the first-type response packet of the main router is intercepted by the optical modem, which affects interaction and leads to networking failure. In a case that the optical modem does not enable a packet monitoring function, the first-type packet may be responded by both the main router and the optical modem, which affects normal interaction and leads to errors in address acquisition by the sub-router. In order to solve the above problems, after receiving the first-type packet of the connected terminal, the sub-router first converts the first-type packet to a second-type packet unrecognizable by the optical modem, then transparently transmits the second-type packet to the main router through the optical modem, next receives the second-type response packet of the main router transparently transmitted through the optical modem, then converts the second-type response packet to the first-type response packet, and finally sends the first-type response packet to the terminal, so that the address acquisition is successful. Optionally, the first-type packet and the first-type response packet may be standard DHCP packets.

A packet in this embodiment of the present application is always a second-type packet or a second-type response packet when passing through the transparent transmission of the optical modem. Since the optical modem cannot recognize the port numbers of the second-type packet and the second-type response packet, the second-type response packet of the main router is not intercepted due to enabling of a monitoring function of the optical modem, and the optical modem has no opportunity to respond to the first-type packet of the sub-router at the same time. The present application solves the problem that the optical modem prohibits the main router from assigning addresses, and also solves the problem that the optical modem and the main router simultaneously respond to the first-type packet and affect normal interaction.

It should be noted that a DHCP snooping function of the optical modem specifically intercepts an address request packet and does not intercept other types of packets.

In some embodiments, a port number of the first-type packet is a port number of the address request packet, and a value of the port number of the first-type packet is different from a value of the port number of the second-type packet.

It should be noted that the first-type packet is an address request packet, and is a standard protocol packet of dynamic host configuration protocol (DHCP). A specific port number of the packet can be 67/68. The value of the port number of the second-type packet may be different, so as to avoid being intercepted by the optical modem.

In some embodiments, the port number of the first-type packet is a port number of the address request packet, and a quantity of digits of the port number of the second-type packet is greater than or equal to a quantity of digits of the port number of the first-type packet.

The quantity of digits of the second-type packet is greater than or equal to the quantity of digits of the first-type packet, for example, 78/79, 367/368, 4467/4468, 46067/46068, that is, a port number less than 65536 may be used as long as the port number is not occupied. However, a relatively small number such as 78, 367, or 4067 may have a risk of conflict with a port number already used by a system.

In some embodiments, the port number of the first-type packet may be 67/68, and the port number of the second-type packet may be 54067/54068.

Exemplarily, the port number 67/68 of the first-type packet is a standard packet type, and is specifically used for an address request and matched with a VLAN4033 channel. The port number 54067/54068 of the second-type packet is a non-standard packet type, and is obtained by mapping and modifying a standard packet port number, that is, 67 is modified into 54067, and 68 is modified into 54068, so as to solve the problem that the first-type response packet of the main router is intercepted due to enabling of the packet monitoring function of the optical modem.

The optical modem may recognize the port numbers of the first-type packet and the first-type response packet, that is, in a case that the optical modem enables the packet monitoring function, the first-type response packet is intercepted by the optical modem, causing response failure of the main router. The optical modem cannot recognize the port numbers of the second-type packet and the second-type response packet, that is, the optical modem does not intercept the second-type packet response packet, so that the packet may be transparently transmitted through the optical modem. In this embodiment of the present application, when the packet passes through the optical modem, the first-type packet is always converted to the second-type packet, or the first-type response packet is converted to the second-type response packet, so that normal interaction between the sub-router, the optical modem, and the main router is implemented.

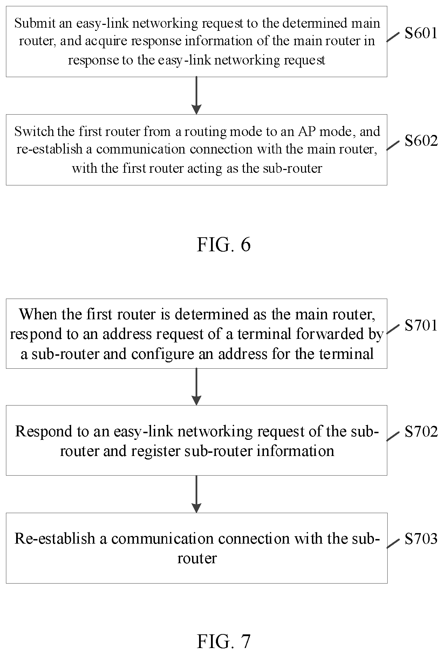

With reference to FIG. 6, the parallel networking method further includes the following steps:
S601. Submit an easy-link networking request (for example, it may be a parallel networking request) to the determined main router, and acquire response information of the main router in response to the easy-link networking request; where the easy-link networking request is forwarded through the optical modem.

S602. Switch the first router from a routing mode to an AP mode, and re-establish a communication connection with the main router, with the first router acting as the sub-router.

In a possible implementation, after acquiring the address, the sub-router further performs easy-link networking.

Specifically, the sub-router sends an easy-link networking request to the main router, and after the sub-router receives the response information of the main router, the sub-router switches from the routing mode to a wireless access point mode (AP), and re-establishes a communication connection with the main router, and the networking is completed.

It may be understood that when the sub-router is already in AP mode when receiving the response information and, the sub-router may further establish a transmission control protocol (TCP) connection with the main router. When the sub-router is not in AP mode when receiving the response information and, the sub-router needs to be switched to the AP mode, and re-execute the address acquisition process and TCP connection establishment as described above to achieve networking.

It should be noted that, the sub-router sends an easy-link networking request packet in the process of the easy-link networking request. The packet is a packet of a pre-configured management protocol and is forwarded by using a same forwarding channel as that in an address request process (that is, in a case that the address request process uses the preset VLAN4033 channel, the easy-link request process also uses the preset VLAN4033 channel; and in a case that the address request process uses a macVLAN channel, the easy-link request process also uses the macVLAN channel), and the packet is also converted to a second-type packet when passing through the optical modem. Since the optical modem does not recognize any second-type packets passing through it, the optical modem only acts as a bridge between the sub-router and the main router and does not perform other operations.

In some embodiments, with reference to FIG. 7, the parallel networking method further includes the following steps:
S701. When the first router is determined as the main router, respond to an address request of a terminal forwarded by the sub-router and configure an address for the sub-router.

S702. Respond to the easy-link networking request of the sub-router and register information of the sub-router.

S703. Re-establish a communication connection with the sub-router.

In a possible implementation, when the first router is determined as the main router, the main router needs to receive the address request of the sub-router and configure an address for the sub-router. After the address configuration, the main router also needs to receive the easy-link networking request of the sub-router, register the information of the sub-router, and re-establish a communication connection with the sub-router, so that the parallel networking is completed. The information of the sub-router for registering includes one or more of a serial number SN, a MAC address, a software version number, a forwarding mode, an IP address, and the like of the sub-router.

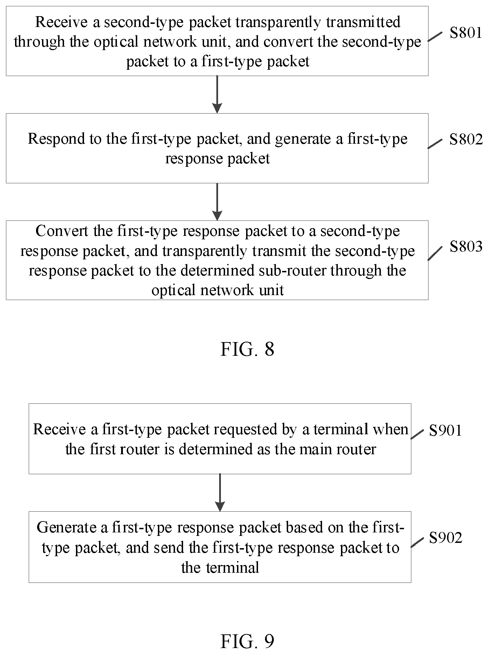

In some embodiments, with reference to FIG. 8, the responding to the address request of the sub-router and configuring the address for the sub-router includes the following steps:
S801. Receive a second-type packet transparently transmitted through the optical modem, and convert the second-type packet to a first-type packet.

S802. Respond to the first-type packet, and generate a first-type response packet.

S803. Convert the first-type response packet to a second-type response packet, and transparently transmit the second-type response packet to the determined sub-router through the optical modem.

The first-type packet and the first-type response packet are recognizable by the optical modem, and the second-type packet and the second-type response packet are unrecognizable by the optical modem.

In a possible implementation, a process that the main router configures the address for the sub-router is as follows: the main router first receives the second-type packet of the sub-router transparently transmitted through the optical modem, and the main router converts the second-type packet to the first-type packet, responds to the first-type packet, and generates the first-type response packet. Next, the main router converts the first-type response packet to the second-type response packet that is unrecognizable by the optical modem, and finally transparently transmits the second-type response packet to the sub-router through the optical modem, so that the main router completes address configuration for the sub-router.

In a process of configuring the address for the sub-router by the main router in this embodiment of the present application, similarly, the packet is always a second-type packet or a second-type response packet when passing through the transparent transmission of the optical modem. Since the optical modem cannot recognize the port numbers of the second-type packet and the second-type response packet, the second-type response packet of the main router is not intercepted due to enabling of a monitoring function of the optical modem, and the optical modem has no opportunity to respond to the first-type packet of the sub-router at the same time. The present application, through packet type conversion, solves the problem that the optical modem prohibits the main router from assigning addresses, and also solves the problem that the optical modem and the main router simultaneously respond to the first-type packet and affect normal interaction.

In some embodiments, the parallel networking method further includes:
when the first router is determined as a main router, simultaneously enabling a preset VLAN ID channel and establishing an interaction channel for interaction with a default VLAN ID channel.

In a possible implementation, when the first router is determined as the main router, the main router simultaneously enables the preset VLAN ID channel and establishes the interaction channel for interaction with the default VLAN ID channel. The sub-router switches to a corresponding forwarding channel according to the packet channel type of the optical modem. For example, when the optical modem supports transparent transmission of the preset VLAN ID, the packet forwarding channel type of the sub-router is switched to the preset VLAN ID channel; and when the optical modem does not support transparent transmission of the preset VLAN ID, the sub-router establishes an interaction channel for interaction with the default VLAN ID channel, and switches the packet forwarding channel to the interaction channel, that is, the macVLAN channel.

In some embodiments, with reference to FIG. 9, the parallel networking method further includes the following steps:
S901. Receive a first-type packet requested by a terminal when the first router is determined as the main router.

S902. Generate a first-type response packet based on the first-type packet, and send the first-type response packet to the terminal.

In a possible implementation, when the first router is determined as the main router, and the terminal is connected to the main router, a process that the terminal acquires the address is as follows: the main router receives the first-type packet of the terminal, generates the first-type response packet based on the first-type packet, and then sends the first-type response packet to the terminal, so that the terminal successfully acquires the address. The main router in this embodiment of the present application directly performs address configuration for the terminal connected to the main router.

In some embodiments, the determining that the second router to be networked and the first router are connected in parallel to the optical modem is implemented in the following manner:
sending a discovery packet through a WAN port, and receiving a discovery packet through the WAN port. It may be understood that routers to be networked may send discovery packets through respective WAN ports according to a preset period.

In a possible implementation, the first router to be networked sends a discovery packet and receives a discovery packet, indicating that a second router to be networked and the first router are connected in parallel to the optical modem. A fact that the discovery packet is not received indicates that no second router to be networked is connected in parallel to the optical modem together with the first router. This embodiment of the present application determines that a plurality of routers are connected in parallel to the optical modem by sending and receiving a discovery packet through the WAN port.

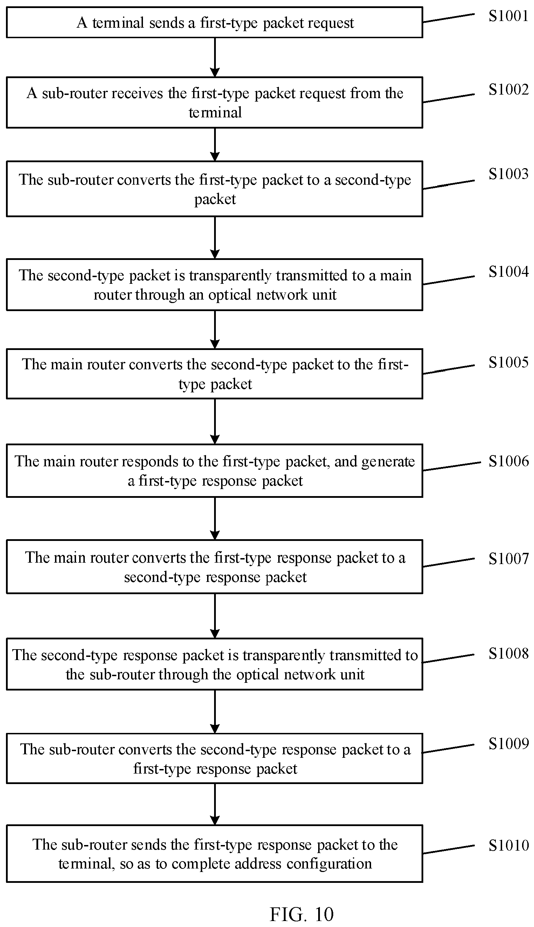

For easier understanding of the solution according to the embodiments of the present application, a process that the terminal acquires the address in the parallel networking method is described in detail below through a specific embodiment. As shown in FIG. 10, taking the terminal connected to the sub-router and the optical modem supporting VLAN transparent transmission as an example, this process includes the following steps:
S1001. A terminal sends a first-type packet request.

S1002. A sub-router receives the first-type packet request from the terminal.

S1003. The sub-router converts the first-type packet to a second-type packet.

S1004. The second-type packet is transparently transmitted to a main router through an optical modem.

S1005. The main router converts the second-type packet to the first-type packet.

S1006. The main router responds to the first-type packet, and generates a first-type response packet.

S1007. The main router converts the first-type response packet to a second-type response packet.

S1008. The second-type response packet is transparently transmitted to the sub-router through the optical modem.

S1009. The sub-router converts the second-type response packet to a first-type response packet.

S1010. The sub-router sends the first-type response packet to the terminal, so as to complete address configuration.

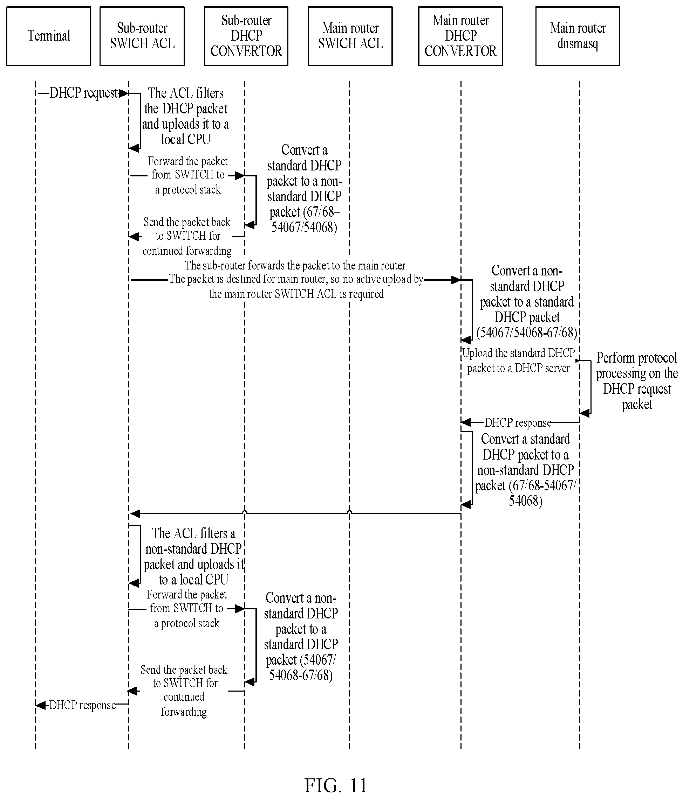

FIG. 11 is a schematic diagram of a process of acquiring an address by a terminal, specifically: a process of address acquisition of a wired terminal includes the following steps in a case that a router connected to the wired terminal is a sub-router and the optical modem supports transparent transmission of a preset VLAN ID:
(1) The wired terminal sends a dynamic host configuration protocol (DHCP) request. At this time, the port number of the DHCP request packet may be 67/68.
(2) The DHCP request is sent to a switch chip access control list (Switch ACL) module of the sub-router, and filtering is performed according to rules.
(3) The DHCP request is sent to the dynamic host configuration protocol conversion (DHCP Convertor) module of the sub-router, a standard DHCP packet is converted to a non-standard DHCP packet, and then the non-standard DHCP packet is sent back to the switch chip access control list module of the sub-router. At this time, a port number of the converted non-standard DHCP packet may be 54067/54068.
(4) The non-standard DHCP packet is directly sent to the dynamic host configuration protocol conversion module of the main router through the optical modem.
(5) The dynamic host configuration protocol conversion module of the main router converts the non-standard DHCP packet to a standard DHCP packet, and responds to the standard DHCP packet request after processing by a server protocol of the main router; that is, the port number of the non-standard DHCP packet is converted from 54067/54068 to 67/68.
(6) The dynamic host configuration protocol conversion module of the main router then converts the responded standard DHCP packet to a responded non-standard DHCP packet, and sends the responded non-standard DHCP packet to the switch chip access control list module of the sub-router through the optical modem, and filters according to rules; that is, the port number of the standard DHCP packet is converted from 67/68 to 54067/54068.
(7) The switch chip access control list module of the sub-router sends the responded non-standard DHCP packet to the dynamic host configuration protocol conversion module.
(8) The dynamic host configuration protocol conversion module of the sub-router converts the responded non-standard DHCP packet to a responded standard DHCP packet, and sends the responded standard DHCP packet back to the switch chip access control list module; that is, the port number of the non-standard DHCP packet is converted from 54067/54068 to 67/68.
(9) The switch chip access control list module of the sub-router sends the responded standard DHCP packet to the wired terminal, so as to complete address configuration.

An embodiment of the present application further provides a parallel networking apparatus, applied to a first router, characterized in that, including:
an optical modem parallel discovery module, configured to determine that a second router to be networked and the first router are connected in parallel to an optical modem; further configured to determine a main router together with the second router based on a preset election rule; and further configured to detect whether the optical modem supports transparent transmission of a preset VLAN ID; and
a wireless access point management module, configured to, when the first router is a sub-router, switch a packet forwarding channel type in the sub-router to a target channel type, so that packets of the sub-router and packets of the main router may be interacted through transparent transmission of the optical modem.

In some embodiments, the wireless access point management module is further configured to, when the first router is the main router, simultaneously enable a preset VLAN ID channel and establish an interaction channel for interaction with a default VLAN ID channel.

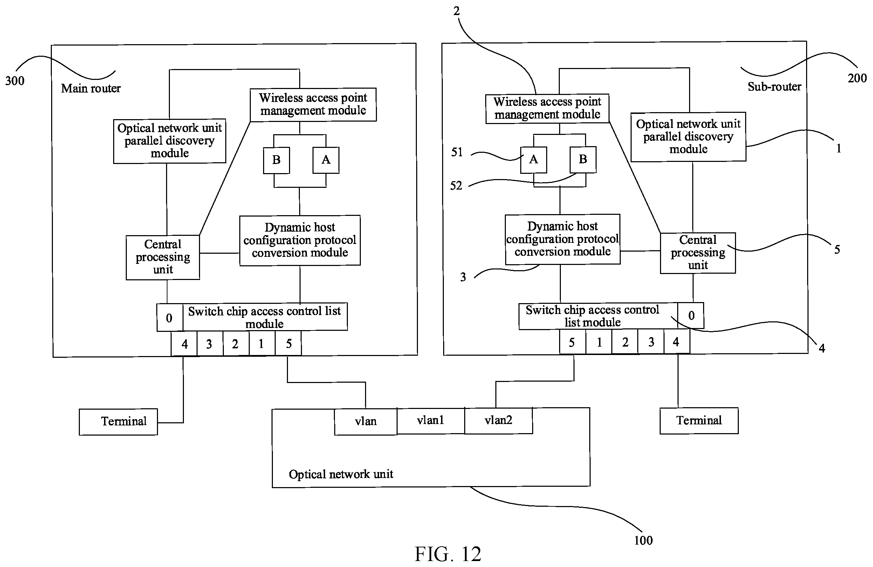

As shown in FIG. 12, an embodiment of the present application further provides a parallel networking system, including an optical modem 100 and a plurality of routers; where
the plurality of routers are connected in parallel to the optical modem 100; and
the optical modem 100 is configured to transparently transmit interaction packets between the plurality of routers.

In a possible implementation, with reference to FIG. 12, the main router 300 and the sub-router 200 are connected in parallel to the optical modem 100, and the optical modem 100 is configured to transparently transmit interaction packets between the sub-router 200 and the main router 300.

As shown in FIG. 12, the router in the parallel networking system of the embodiment of the present application includes:
an optical modem parallel discovery (Opendisc) module, configured to determine that a second router to be networked and the router are connected in parallel to the optical modem 100; further configured to determine the main router 300 together with the second router based on a preset election rule; and further configured to detect whether the optical modem 100 supports transparent transmission of a preset VLAN ID; and
a wireless access point management (APMGR) module, configured to, when the router is the sub-router 200, switch a packet forwarding channel type in the sub-router 200 to a target channel type (channel A or B in FIG. 12), so that packets of the sub-router 200 and packets of the main router 300 may be interacted through transparent transmission of the optical modem 100.

In a possible implementation, with reference to FIG. 12, the router in this embodiment of the present application includes an optical modem parallel discovery module 1 and a wireless access point management module 2, where the optical modem parallel discovery module 1 is configured to determine that a second router to be networked and the router are connected in parallel to the optical modem 100; further configured to determine the main router 300 together with the second router based on a preset election rule; and further configured to detect whether the optical modem 100 supports transparent transmission of a preset VLAN ID.

The wireless access point management module 2 is configured to, when the router is determined as the sub-router 200, switch the packet forwarding channel type in the sub-router 200 to the packet transparent transmission channel type of the optical modem (channel A or B in FIG. 12), so that packets of the sub-router 200 and packets of the main router 300 may be interacted through transparent transmission of the optical modem 100. Specifically, when the optical modem 100 supports transparent transmission of the preset VLAN ID, the packet forwarding channel type of the sub-router 200 is switched to the preset VLAN ID channel 51 (channel A in FIG. 12); and when the optical modem 100 does not support transparent transmission of the preset VLAN ID, the sub-router 200 establishes an interaction channel 52 for interaction with the default VLAN ID channel (channel B in FIG. 12), and switches the packet forwarding channel to the interaction channel 52, that is, the macVLAN channel. The wireless access point management module 2 is further configured to submit an easy-link networking request to the determined main router 300, and acquire response information of the main router 300; and further configured to switch the sub-router 200 from a routing mode to an AP mode, and re-establish a communication connection with the main router 300. The wireless access point management module 2 is further configured to, when the router is determined as the main router 300, simultaneously enable the preset VLAN ID channel 51 and establish the interaction channel 52 for interaction with the default VLAN ID channel (channels A and B in FIG. 12).

The router in this embodiment of the present application detects whether the optical modem 100 supports transparent transmission of the preset VLAN ID through the optical modem parallel discovery module 1, and correspondingly switches the packet forwarding channel type of the sub-router 200 through the wireless access point management module 2, solving the problem that normal interaction cannot be performed between the sub-router 200 and the main router 300 due to the optical modem 100 not supporting transparent transmission of the preset VLAN ID.

In some embodiments, the wireless access point management module is further configured to, when the router is the main router 300, simultaneously enable a preset VLAN ID channel and establish an interaction channel for interaction with a default VLAN ID channel.

Continuing to refer to FIG. 12, the router in this embodiment of the present application further includes a switch chip access control list module 4 and a dynamic host configuration protocol conversion module 3, where the dynamic host configuration protocol conversion module 3 is configured to convert a first-type packet that is recognizable by the optical modem 100 to a second-type packet that is unrecognizable by the optical modem 100; and further configured to convert the second-type packet to the first-type packet.

When the router is determined as the sub-router 200, the switch chip access control list module 4 is configured to receive a first-type packet of a terminal connected to the sub-router 200, and send the first-type packet to the dynamic host configuration protocol conversion module 3 of the sub-router 200 through a central processing unit 5; further configured to transparently transmit the second-type packet through the optical modem 100 and send the second-type packet to the dynamic host configuration protocol conversion module 3 of the main router 300; further configured to receive a second-type response packet responded by the main router 300, and send the second-type response packet transparently transmitted through the optical modem 100 to the dynamic host configuration protocol conversion module 3 of the sub-router 200; and further configured to send the first-type response packet to the terminal.

When the router is determined as the main router 300, the switch chip access control list module 4 is configured to receive a first-type packet of a terminal connected to the main router 300, and generate a first-type response packet based on the first-type packet; and further configured to send the first-type response packet to the terminal.

The router in this embodiment of the present application solves, through the packet type conversion of the dynamic host configuration protocol conversion module 3 and the packet forwarding of the switch chip access control list module 4, the problem that the optical modem 100 intercepts the response packet of the main router 300 in the case that the packet monitoring function is enabled while the terminal is connected to the sub-router 200, and also solves the problem that the optical modem 100 and the main router 300 simultaneously respond to packets and thus affect normal interaction.

It should be noted that when the terminal is a wireless terminal, a request sent by the wireless terminal does not pass through the switch chip access control list module 4, but is directly sent to the central processing unit 5 of the sub-router 200, and other processes are consistent with the request process of the wired terminal. Details are not described herein again. During address acquisition by the wireless terminal, the response packet return process also does not pass through the switch chip access control list module 4, but is directly sent to the central processing unit 5 of the sub-router 200, and other processes are consistent with the address acquisition process of the wired terminal. Details are not described herein again. In addition, a process in which the sub-router 200 itself sends a request and acquires an address is consistent with that of the wireless terminal, details are not described herein again.

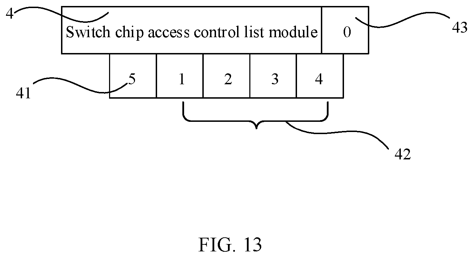

With reference to FIG. 13, the switch chip access control list module 4 of the router includes a wide area network (WAN) port, a local area network (LAN) port, and a central processing unit port 43. In FIG. 13, 1 to 4 denote local area network ports 42, 5 denotes a wide area network port 41, and 0 denotes a central processing unit port 43. The optical modem 100 is connected to the router through the wide area network port 41, the terminal is connected to the switch chip access control list module 4 through the local area network port 42, and the switch chip access control list module 4 is connected to the central processing unit 5 through the central processing unit port 43.

The embodiments of the present application further provide an electronic device, including a memory, a processor, and a computer program stored on the memory and runnable on the processor, where when the processor executes the program, the parallel networking method according to the first aspect is implemented.

The embodiments of the present application further provide a computer-readable storage medium having a computer program stored thereon, where when the program is executed by a processor, the parallel networking method according to the first aspect is implemented.

Obviously, those skilled in the art can make various changes and modifications to the present application without departing from the spirit and scope of the present application. If these modifications and variations of the present application fall within the scope of the claims of the present application and their equivalent technologies, the present application also intends to include these modifications and variations.

## Claims

1. A networking method, applied to a first router to be networked, comprising:
determining, when the first router is determined as a sub-router, whether the optical modem supports transparent transmission of a preset virtual local area network identifier VLAN ID; and
switching a packet forwarding channel type in the first router to a target channel type when the optical modem does not support transparent transmission of the preset VLAN ID; wherein the target channel type is a packet channel type through which the optical modem performs transparent transmission of packets.

2. The method according to claim 1, wherein before the first router is determined as the sub-router, the method further comprises: in response to a parallel networking command, determining a router role of the first router based on a preset election rule; wherein the router role comprises a main router and a sub-router; and the parallel networking command is broadcast in response to a networking instruction input by a user.

3. The method according to claim 1, wherein after the determining whether the optical modem supports transparent transmission of the preset virtual local area network identifier VLAN ID, the method further comprises:
when the optical modem does not support transparent transmission of the preset VLAN ID, establishing an interaction channel for interaction with a default VLAN ID channel, and switching the packet forwarding channel to the interaction channel.

4. The method according to claim 1, wherein the method further comprises: acquiring an address assigned by a main router.

5. The method according to claim 4, wherein the acquiring the address assigned by the main router comprises:
transparently transmitting an address request packet to the main router through the optical modem; and
receiving an address response packet transparently transmitted by the main router through the optical modem to inform a requester of the address request packet; wherein
the requester comprises a first terminal accessing the sub-router and the sub-router.

6. The method according to claim 5, wherein the transparently transmitting the received address request packet to the main router through the optical modem comprises:
receiving a first-type packet from the requester, and converting the first-type packet to a second-type packet; wherein the first-type packet is recognizable by the optical modem and the second-type packet is unrecognizable by the optical modem; and
transparently transmitting the converted second-type packet to the main router through the optical modem; and
the receiving the address response packet transparently transmitted by the main router through the optical modem to inform the requester of the address request packet comprises:
receiving a second-type response packet transparently transmitted through the optical modem, and converting the second-type response packet to a first-type response packet, wherein the second-type response packet is a response packet sent by the main router based on the second-type packet; and
sending the first-type response packet to the requester.

7. The method according to claim 5, wherein a port number of the first-type packet is a port number of the address request packet, and a value of the port number of the first-type packet is different from a value of the port number of the second-type packet.

8. The method according to claim 7, wherein a quantity of digits of the port number of the second-type packet is greater than or equal to a quantity of digits of the port number of the first-type packet.

9. The method according to claim 1, wherein after the sub-router acquires the address assigned by the main router, the method further comprises:
sending an easy-link networking request to the main router, and acquiring response information of the main router in response to the easy-link networking request; wherein the easy-link networking request is forwarded through the optical modem; and
establishing a communication connection with the main router.

10. The method according to claim 9, wherein the establishing the communication connection with the main router comprises:
switching the first router from a routing mode to an AP mode, and re-establishing a communication connection with the main router.

11. The method according to claim 1, wherein the method further comprises:
when the first router is determined as a main router, establishing a preset VLAN ID channel and establishing an interaction channel for interaction with a default VLAN ID channel; and
responding to an address request packet sent by the determined sub-router through the optical modem and configuring an address for a requester of the address request packet; wherein
the requester comprises a first terminal accessing the sub-router and the sub-router.

12. The method according to claim 11, wherein the responding to the address request packet of the determined sub-router and configuring the address for the requester of the address request packet comprises:
receiving a second-type packet transparently transmitted through the optical modem, and converting the second-type packet to a first-type packet;
responding to the first-type packet, and generating a first-type response packet; and
converting the first-type response packet to a second-type response packet, and transparently transmitting the second-type response packet to the requester of the address request packet through the optical modem; wherein
the first-type packet and the first-type response packet are recognizable by the optical modem, and the second-type packet and the second-type response packet are unrecognizable by the optical modem.

13. The method according to claim 11, wherein the method further comprises:
responding to an easy-link networking request sent by the sub-router through the optical modem and registering information of the sub-router; and
establishing a communication connection with the sub-router.

14. The method according to claim 1, wherein the method further comprises:
receiving a first-type packet requested by a second terminal accessing a main router when the first router is determined as the main router; and
generating a first-type response packet based on the first-type packet and sending the first-type response packet to the second terminal.

15. The method according to claim 1, wherein before the first router is determined as the sub-router, the method further comprises:
in a routing mode, determining that a second router to be networked and the first router are connected in parallel to the optical modem.

16. The method according to claim 15, wherein the determining that the second router to be networked and the first router are connected in parallel to the optical modem is implemented in the following manner:
sending a discovery packet through a wide area network WAN port of the first router; and
receiving the discovery packet sent by the second router through the WAN port.

17. A networking apparatus, applied to a first router, comprising:
a wireless access point management module, configured to determine, when the first router is a sub-router, whether the optical modem supports transparent transmission of a preset virtual local area network identifier VLAN ID; and switch a packet forwarding channel type in the first router to a target channel type when the optical modem does not support transparent transmission of the preset VLAN ID; wherein the target channel type is a packet channel type through which the optical modem performs transparent transmission of packets; wherein the switching the packet forwarding channel type in the first router to the target channel type comprises: establishing an interaction channel for interaction with a default VLAN ID channel, and switching the packet forwarding channel to the interaction channel.

18. A networking system, comprising:
a plurality of routers, the plurality of routers being connected in parallel to an optical modem; and
the optical modem, configured to transparently transmit interaction packets between the plurality of routers.

19. An electronic device, comprising a memory, a processor, and a computer program stored on the memory and runnable on the processor, wherein when the processor executes the computer program, the steps of the networking method according to any one of claims 1 to 16 are implemented.

20. A computer-readable storage medium, storing a computer program, wherein when the computer program is executed by a processor, the steps of the networking method according to any one of claims 1 to 16 are implemented.
